(19) Europäisches Patentamt

European Patent Office

Office européen des brevets

(11) **EP 4 137 863 A1**

(12) **EUROPEAN PATENT APPLICATION**

(43) Date of publication:
**22.02.2023 Bulletin 2023/08**

(21) Application number: **21192048.3**

(22) Date of filing: **19.08.2021**

(51) International Patent Classification (IPC):
*G02B 21/00* (2006.01)    *G02B 21/36* (2006.01)

(52) Cooperative Patent Classification (CPC):
**G02B 21/0056; G02B 21/0068; G02B 21/0092;**
**G02B 21/365**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Healthcare GmbH**
**91052 Erlangen (DE)**

(72) Inventors:
• **Seliger, Ramona**
  **91346 Wiesenttal-Muggendorf (DE)**
• **Engel, Thomas**
  **73432 Aalen (DE)**
• **Kraus, Martin**
  **90765 Fürth (DE)**

(74) Representative: **Maier, Daniel Oliver**
**Siemens AG**
**Postfach 22 16 34**
**80506 München (DE)**

(54) **DEVICE AND METHOD FOR OBSERVING A BIOLOGICAL PROBE**

(57) The invention relates to a device for observing a biological probe. The device comprises an optical microscope, a beam splitting device and a plurality of cameras. The optical microscope comprises a support structure for supporting the biological probe in a beam path of the optical microscope. The beam splitting device is arranged in the beam path downstream from the biological probe, wherein the beam splitting device is configured to split the beam path into a plurality of beam paths. Each camera is arranged in one beam path of the plurality of beam paths and is configured to generate camera images of the biological probe. For at least some of the cameras, focal lengths of the cameras differ from one another and/or wavelength ranges captured by the cameras for generating the camera images of the biological probe differ from one another and/or sensor types of the cameras (41a-4na; 41b-44b) differ from one another.

FIG 2

EP 4 137 863 A1

**Description**

The invention relates to a device and a method for observing a biological probe.

Quantitative phase microscopy has emerged as a tool for biomedical research, due to its capability to make optical thickness variation of a specimen visible without the need of staining. As an example, quantitative phase microscopy may be used for cellular level red blood cell (RBC) volume analysis.

There are varying approaches for the acquisition of a quantitative phase of an object. An example is spectroscopic phase microscopy based on diffraction phase microscopy which is a common-path quantitative phase imaging (QPI) method. Another example is spatial light interference microscopy which combines phase contrast microscopy, which renders high contrast intensity images of transparent specimens, and holography, where the phase information from the object is recorded. A further approach is digital holographic microscopy, where the light wave front information corresponding to an object is digitally recorded as a hologram. Afterwards, the object image is calculated by using a numerical reconstruction algorithm. These set-ups are relatively complex, expensive and sensitive to errors in the optical alignment.

Another approach is to calculate a quantitative phase by brightfield microscopy with the so called "transport-of-intensity equation" (TIE) instead of phase microscopy. The TIE relates changes in phase in an x-y plane to changes in phase in a z direction (along the optical axis) by the calculation of the deviation between two brightfield images with a defined difference in z. For this approach in its current implementation, a z-stack of images with an automated scan software is required, which needs precise z-movement and acquisition time.

Another optical technique to enhance contrast of transparent specimens is differential interference contrast (DIC). For DIC, the illumination settings of a microscope must be changed compared to brightfield microscopy. In one setup, DIC comprises a light source, a polarizer, a first Wollaston prism, a condenser, an objective lens, a second Wollaston prism and an analyzer. Unpolarized light emitted from the light source is polarized by the polarizer. The first Wollaston prism separates the polarized light into perpendicularly polarized components with a spatial offset defined by the Wollaston prism. The condenser lens directs the polarized components onto the probe. The objective lens directs the light after going through the probe onto the second Wollaston prism which compensates the nominal spatial offset and recombines the perpendicularly polarized light. The analyzer is a polarizing filter which removes directly transmitted light. DIC can be used for example for classification of unstained white blood cells (WBC).

Approaches for a quantitative phase measurement currently exist in complex implementations and/or with precisely moving parts that are difficult to engineer in a commercial instrument.

Interferometric set-ups are known from Jafarfard, 2014, "Dual wavelength diffraction phase microscopy for simultaneous measurement of RI and thickness" Opt. Lett. 39, 2908-2911 (2014). An approach using digital holographic microscopy is described in Rappaz, 2008, "Comparative study of human erythrocytes by digital holographic microscopy confocal microscopy and impedance volume analyzer", Cytometry A 73(10), 895-903 (2008). The use of z-stacks for a TIE based phase reconstruction is described in Phillips, "Quantitative optical microscopy measurement of cellular biophysical features with a standard optical microscope", J. Vis. Exp. 86, 50988 (2014). Electronically tunable lenses as a variant for TIE based reconstruction without moving in z-direction are described in US 2016/0139388 A1.

If both brightfield, e.g. for TIE phase reconstruction, and DIC are used, the optical setup must be changed, i.e. brightfield images and DIC images are consecutively acquired by switching between the two illumination settings and recording the respective image. This costs time and hampers real time experiments of fast processes or moving objects.

It is therefore an object of the present invention to provide a device and a method for the fast and easy generation of images of a probe at different contrast setups.

This object is solved by the subject matter of the independent claims. Advantageous embodiments are set out in the dependent claims.

According to a first aspect, the invention provides a device for observing a biological probe. The device comprises an optical microscope, a beam splitting device and a plurality of cameras. The optical microscope comprises a support structure for supporting the biological probe in a beam path of the optical microscope. The beam splitting device is arranged in the beam path downstream from the biological probe, wherein the beam splitting device is configured to split the beam path into a plurality of beam paths. Each camera is arranged in one beam path of the plurality of beam paths and is configured to generate camera images of the biological probe. For at least some of the cameras, focal lengths of the cameras differ from one another and/or wavelength ranges and/or polarization states captured by the cameras for generating the camera images of the biological probe differ from one another and/or sensor types of the cameras differ from one another.

According to a second aspect, the invention provides a method for observing a biological probe, using a device according to the first aspect. The method comprises generating at least one camera image of the biological probe by at least one camera of the plurality of cameras of the device.

The invention provides a method and a device based on a multi camera set-up with at least two cameras which can e.g. be mounted on a standard inverse microscope port. Therefore, multiple camera images can be generated at the same time, which allows an extensive specimen analysis in less time and with less necessary images.

The cameras can be positioned in different optical distances such that at least two cameras are positioned in a way that the acquired images have a defined focal distance difference. That is, one camera may have a focal length corresponding to a z plane and the other cameras have a focal offset dz_i for each camera i. For example, there may be a first camera with a focal length corresponding to the z plane and second and third cameras having a focal offset of dz 2 = +dz and dz_3 = -dz, respectively, i.e. corresponding to a z+dz (extrafocal) plane and z-dz (intrafocal) plane, respectively.

By using different focal distances, it is possible to acquire camera images in a z plane and a z+dz_i plane for TIE phase reconstruction.

The cameras can both be positioned in different optical distances and capture different wavelength ranges and/or different polarization conditions. The number of cameras can be arbitrarily increased to cover multiple wavelengths, multiple polarization states and/or several dz offsets.

Further, sensor types of the cameras might differ from one another. Herein, different sensor types can refer to at least one of a difference in pixel size, a difference in pixel number, a difference in spectral sensitivity or a difference in sensitivity to polarization. Further some cameras may be monochrome cameras, others RGB cameras.

After the light passes through the beam splitting device, there may exist several different polarization states. Said states may have well-defined or undefined polarization states.

According to a further embodiment, the device comprises at least three cameras.

According to a further embodiment of the device, the optical microscope is a polarized light microscope. Accordingly, polarization techniques can be used.

According to a further embodiment of the device, the polarized light microscope is an interference-based microscope, in particular an interference reflection microscope.

According to a further embodiment of the device, the microscope is a differential interference contrast (DIC) microscope. Brightfield and DIC imaging can be carried out at the same time. This provides a simple mass producible solution for brightfield and DIC imaging and the possibility of phase calculation in one shot. A non-interferometric quantitative phase measurement technique is combined with a time saving illumination and contrast process which enables DIC and brightfield image acquisition at one single timepoint.

According to a further embodiment of the device, at least one of the cameras is a monochrome camera. That is, the camera is sensitive to a certain wavelength range for all its sensing elements, referred to as pixels.

According to a further embodiment of the device, at least one of the cameras is a color camera, e.g. a color prism camera. That is, the camera is sensitive to a broad wavelength region, e.g. in the entire visible light wavelength region. According to an embodiment, the device combines color image acquisition, DIC image acquisition and brightfield image acquisition.

According to a further embodiment of the device, the plurality of cameras comprises at least one polarization sensitive camera configured to generate a plurality of camera images corresponding to different polarizations. To obtain brightfield images and DIC images in normal light microscopes, one must switch between the two illumination settings sequentially, which is time consuming and needs moving parts. By using polarization cameras, it is possible to acquire DIC images and brightfield images in parallel.

In polarization sensitive cameras the sensor can be structured in blocks of pixels, each block can consist of four pixels and has therefore four different orientations on a polarization grid, e.g. 90°, 45°, 0° and 135°. The microscope may be configured as a DIC microscope with the analyzer which is normally placed before the camera being removed. The DIC microscope may comprise a first polarizer and a microscope condenser. The camera pixels with the polarization grid arranged parallel to the polarization axes after the first Wollaston prism show brightfield images and the pixel with the grid orientated under 45° shift to the aforementioned show DIC images. Therefore, both brightfield images and DIC images can be generated at the same time with the polarization sensitive camera.

As the resolution of the resulting images is reduced, it can also be favorable to combine the polarization camera with a monochrome or color camera in the multi-camera set-up to obtain high resolution DIC images. A polarization filter may be mounted directly in front of the camera, arranged in a way that it is perpendicular to the first polarizer in the microscope.

The use of special illumination configuration and polarization cameras can reduce the necessary imaging time by a factor of 2 and thus enables the imaging of moving objects.

According to a further embodiment of the device, the at least one polarization sensitive camera generates a plurality of camera images corresponding to different pre-defined polarization states. A computing device can use the obtained images at different, defined polarization states for a phase reconstruction. The computing device may compute absorption information from the brightfield image and can be configured to mathematically remove the absorption information from the DIC images. Therefore, quantitative height information of the specimen can be obtained.

According to a further embodiment of the device, the phase and optionally additionally RBC parameters may be calculated from two DIC images, which differ only in the directional information (i.e. which of the two beams separated in the 1st Wollaston prism is delayed), e.g. using the method described in Shibata et al., "Video-rate quantitative phase analysis by a DIC microscope using a polarization camera," Biomed. Opt. Express 10, 1273-1281 (2019).

For moving objects, e.g. living cells, the parallel acquisition of both contrast methods, i.e. acquiring brightfield and DIC information, significantly reduces artefacts due to position changes, e.g. due to Brownian motion. An example of a combined use of brightfield and DIC information is the analysis of unstained WBC. The classification of WBC in, e.g., the five major groups can be done via Artificial Intelligence analysis. In parallel with the additional information, also RBC parameters can be measured. This enables an application of the measurement set-up for an optical complete blood count.

According to a further embodiment, the device further comprises a computing device configured to generate a DIC image based on a mathematical combination of the camera images corresponding to the different polarizations. The combination can be determined in a calibration phase.

According to a further embodiment of the device, the computing device is configured to generate a brightfield image based on a mathematical combination of the camera images corresponding to the different polarizations. The combination can be determined in a calibration phase.

According to a further embodiment of the device, for at least some cameras the focal lengths of the cameras differ from one another, wherein the device further comprises a computing device configured to carry out a transport-of-intensity-equation, TIE,-based phase reconstruction based on the camera images of the cameras. The TIE has the following form, as described, e.g. in Frank et al., "Non-interferometric, non-iterative phase retrieval by Green's functions", 2010:

$$\frac{2\pi}{\lambda}\frac{\partial}{\partial z}I(x,y,z) = -\nabla_{x,y} \cdot [I(x,y,z)\nabla_{x,y}\Phi],$$

Herein, $\lambda$ is the wavelength, $I(x,y,z)$ is the irradiance at point $(x,y,z)$, and $\Phi$ is the phase of the wave. The TIE expresses the dependence between the intensity and the phase distribution and allows to reconstruct the phase of a wave.

By hard mounting the cameras, the system offers the advantages of a TIE microscopy setup without complex movable components, solving the problem of stability and reproducibility in production. The TIE-based phase reconstruction can then be used for example in combination with brightfield-images to derive absorption information for the determination of hemoglobin concentration and volume of RBCs on a single cell level.

The phase measurement using the TIE based on multiple cameras gives several advantages. The cost is reduced, no movement in the z-direction is necessary, the approach is cheaper than e.g. tunable lenses, there is a reduction of phase noise by acquisition of z and z+dz images at one time point, and a flexible wavelength choice is possible because there is no correction needed as in interferometric set-ups, and the device can therefore be adapted easily to different specimens or buffer systems.

According to a further embodiment of the device, the cameras are synchronized to generate camera images of the biological probe at the same time. This reduces or even removes the influence of moving components of the biological probe. Herein, synchronization can refer to starting the exposure at the same time. Further, the start point of the exposure might be identical and the gain is optimized (ideally equal to 1 to not amplify noise) but the exposure times differ. In some cases, gain might be adjusted (increased) to get a given frame rate to secure throughput of the imaging system. A blurring effect between images of different exposure time could serve as estimate for the movement of objects.

In another embodiment, all exposure times may be the same, but the gains might differ to not saturate some of the camera signals.

According to a further embodiment of the device, the cameras are firmly attached at predefined locations. That is, the cameras are arranged at predefined or preset distances. This provides much more stability and reproducibility for capturing the images, e.g. for a TIE evaluation. In addition, the computation can speed up, therefore reducing the time for reconstruction. Preferably, the device does not comprise moving parts with changeable distances. This significantly improves the accuracy of the measurement. The amount of available light for capturing images with a respective camera is not or only marginally affected as compared to sequential acquisition of images, so that a high parallelization of the process and thus a high throughput can be achieved for the measurements.

According to a further embodiment of the device, a computing device carries out a registration of at least some of the images of the different cameras. For example, if corresponding z and z+dz images are used to calculate the derivative of the intensity, the images must be aligned to each other in a proper way. The final pixel-by-pixel registration may be done by computational analysis.

According to a further embodiment of the device, the beam splitting device is arranged after one common tubelens in the optical beampath. By using the same microscope port for all the cameras, the best correlation between the acquired images at one timepoint is achieved.

According to a further embodiment of the device, an optical bandpass filter is arranged in front of at least some of the cameras. The bandpass filters can differ for at least some of the cameras such that wavelength ranges captured by the cameras for generating camera images of the biological probe differ from one another.

According to a further embodiment, the device comprises a light source for emitting a light beam. The light source can be a customized multi-LED light source, with narrow bandwidth, e.g. achieved by respective bandpass filters.

According to a further embodiment of the method, at least two cameras of the plurality of cameras of the device simultaneously generate a respective camera image of the biological probe.

According to a further embodiment, the method further comprises the step of generating a DIC image based on a mathematical combination of the camera images corresponding to different polarizations.

According to a further embodiment, the method further comprises the step of carrying out a TIE-based phase reconstruction based on the camera images of the cameras.

Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts. It should be understood that method steps are numbered for easier reference but that said numbering does not necessarily imply steps being performed in that order unless explicitly or implicitly described otherwise. In particular, steps may also be performed in a different order than indicated by their numbering. Some steps may be performed simultaneously or in an overlapping manner.

Fig. 1  schematically shows a block diagram illustrating a device for observing a biological probe according to an embodiment of the invention;

Fig. 2  schematically shows a block diagram illustrating a device for observing a biological probe according to a further embodiment of the invention; and

Fig. 3  shows a flow diagram for a method for observing a biological probe according to an embodiment of the invention.

Detailed description of the invention

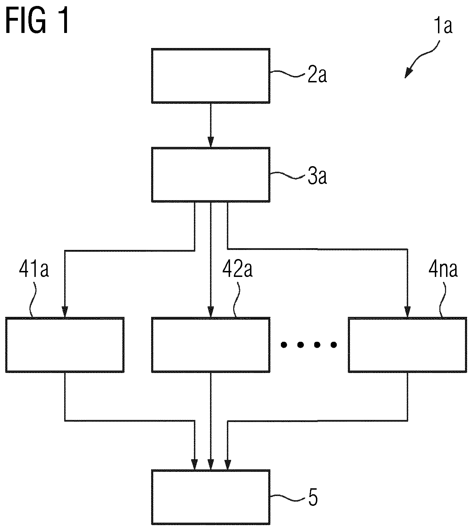

Figure 1 schematically illustrates a device 1a for observing a biological probe. The device 1a comprises an optical microscope 2a, a beam splitting device 3a and a plurality of cameras 41a to 4na. Herein, n denotes an integer greater than or equal to 2 which indicates the number of different cameras. The invention is not restricted to any specific number of cameras.

At least one of the cameras 41a to 4na can be a color camera. Further, at least one of the cameras 41a to 4na can be a polarization sensitive camera. At least one of the cameras 41a to 4na can also be a monochromatic camera.

The optical microscope 2a comprises a support structure for supporting the biological probe in a beam path of the optical microscope.

The beam splitting device 3a is arranged in the beam path downstream from the biological probe and splits the beam into a plurality of beams directed towards a respective camera 41a to 4na. Each camera 41a to 4na acquires an image and provides the image to a computing device 5.

The optical microscope 2a can be a polarized light microscope, for instance a differential interference contrast microscope. In this case, at least one of the cameras 41a to 4na can be a polarization sensitive camera, having different types of pixels which are sensitive to different polarizations. For each type of pixels, respective camera images are acquired. By calibrating the device 1a, a first mathematical combination can be found which corresponds to a DIC image. Further, another mathematical combination may be found which corresponds to a brightfield image.

Some of the cameras 41a to 4na may acquire camera images of different colors. That is, the cameras 41a to 4na are sensitive to different wavelength regions, i.e. by using bandpass filters. Herein, the wavelength ranges captured by the cameras for generating the camera images of the biological probe may only partially differ from one another, i.e., there may be a certain overlap of the wavelength ranges.

Additionally or alternatively, the focal lengths of the cameras differ from each other. Preferably, all of the cameras 41a to 4na are mounted at fixed positions and are not movable.

Based on camera images acquired by cameras 41a to 4na with different focal lengths, the computing device 5 can be configured to carry out a TIE-based phase reconstruction or a DIC-based phase reconstruction.

Preferably, the cameras 41a to 4na are synchronized to generate camera images of the biological probe at the same time.

The cameras 41a to 4na may differ with respect to a sensor type, such as pixel sizes or pixel numbers.

The computing device 5 may comprise hardware and software components. The hardware components may comprise at least one of microcontrollers, central processing units (CPU), graphical processing units (GPU), memories and storage devices.

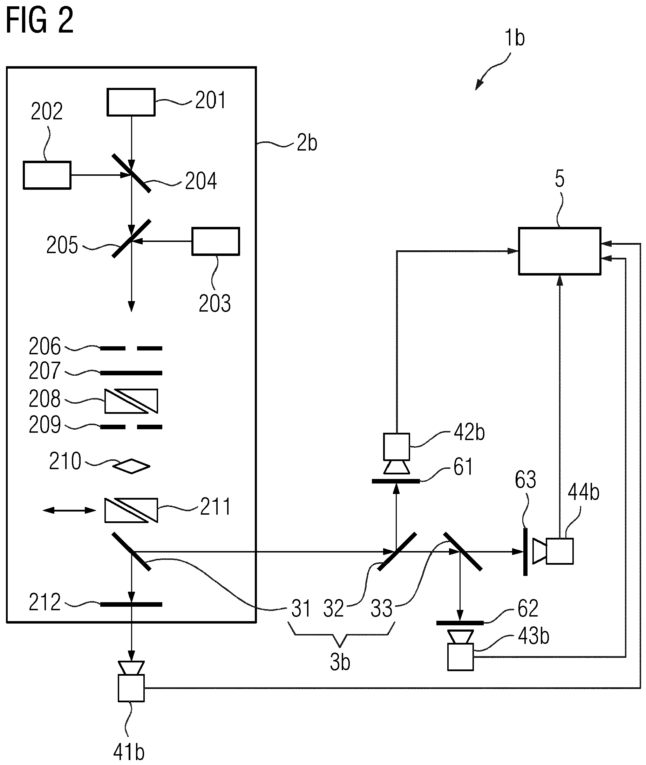

Figure 2 schematically illustrates a further device 1b for analyzing a biological probe. The device 1b comprises a microscope 2b which is a differential interference contrast microscope. The microscope 2b comprises a light source which comprises a first LED 201, a second LED 202 and a third LED 203. Each of the first and second LEDs 201 to 203 emits a single light beam with a specific wavelength and bandwidth, wherein the wavelengths of the LEDs 201 to 203 differ from each other.

The light source further comprises a first dichroic mirror or beam combiner 204 and a second dichroic mirror or beam combiner 205 which combine the light beams emitted by the first to third LEDs 201 to 203 into a single light beam. Furthermore, the wavelength dependent transmission and/or reflection properties of the respective beam combiners 204 and 205 may also be used to taylor the spectral and/or polarisation properties of the combined single beam according to the requirements of the measurements planned. This beam conditioning helps to reduce the light budget interacting with the biological sample to reduce potential harm to the sample, e.g. drying, bleaching and/or heating, while imaging it.

This resulting light beam typically is unpolarized and is directed through a first aperture 206 towards a polarizer 207 for polarizing the light beam. For example, the polarizer 207 can be a linear polarizer with a polarization plane tilted by 45° with respect to the x-axis of the respective imaging sensor coordinate system and is named 45° polarizing filter.

A first Wollaston prism 208 separates the polarized light beam into perpendicularly polarized components and spatially separates the two polarized components by a given lateral offset. After passing a second aperture 209, the polarized components are directed towards a support structure 210 holding the biological probe.

A second Wollaston prism 211 re-combines the perpendicularly polarized light and compensates for the spatial offset after passing through the biological probe. An analyzer 212 removes directly transmitted light. For example, the analyzer 212 can be a 135° polarizing filter.

In the beam path of the optical microscope, arranged between the second Wollaston prism 211 and the analyzer 212, there is a first beam splitter 31 which splits the light beam of the light passing through the second Wollaston prism 211 into a first light beam, directed toward the analyzer 212, and a second light beam, directed towards a second beam splitter 32.

After passing the analyzer 212, the first light beam is directed towards a first camera 41b. The first camera 41b captures respective camera images.

The second light beam is split by the second beam splitter 32 into a third light beam and a fourth light beam. The third light beam goes through a first filter 61 which is a bandpass filter with a first frequency range, for example comprising a frequency of light emitted by the third LED 203, and enters a second camera 42b.

The fourth light beam is directed towards a third beam splitter 33 and split into a fifth light beam and a sixth light beam. The fifth light beam goes through a second filter 62 which is a bandpass filter with a second frequency range, for example comprising a frequency of light emitted by the second LED 202, and enters a third camera 43b.

The sixth light beam goes through a third filter 63 which is a bandpass filter with a third frequency range, for example comprising a frequency of light emitted by the first LED 201, and enters a fourth camera 43b.

The first to third beam splitters 31 to 33 form a beam splitting device for generating respective light beams directed towards the first to fourth cameras 41a to 44d.

The first camera 41b may be a standard microscope camera. For the second to fourth cameras 42b to 44b, wavelength ranges captured by the cameras 42b to 44b for generating camera images of the biological probe are defined by the respective first to third filters 61 to 63 and differ from one another. That is, each camera 42b to 44b is generating images of the biological probe in a different wavelength region, i.e. at different colors.

Moreover, the second camera 42b, third camera 43b and fourth camera 44b have a first focal length, second focal length and third focal length, respectively. The first to third focal lengths all differ from one another. For example, the second camera 42b, third camera 43b and fourth camera 44b can be positioned in different optical distances on a slider, such that the acquired images have a defined focal distance difference. Preferably, all cameras are firmly mounted.

According to this embodiment, both the wavelength ranges captured by the second to fourth cameras 42b to 44b and the focal lengths of the second to fourth cameras 42 to 44b all differ from one another.

According to further embodiments, only the wavelength ranges may differ from one another or only the focal lengths may differ from one another.

A computing device 5 receives the camera images from the first to fourth cameras 41b to 44b. Based on the camera images from the second to fourth cameras 42b to 44b, the computing device 5 may carry out a TIE-based phase reconstruction. The image from the first camera 41b is a DIC image. All images may be generated at the same time. That is, the first to fourth cameras 41b to 44b may be synchronized to generate images at the same time.

According to further embodiments, the analyzer 212 is absent and the first camera 41b is a polarization dependent camera. The computing device 5 may generate a DIC image based on a first mathematical combination of camera images corresponding to different polarizations, acquired by the polarization dependent camera. The computing device 5 may further generate a brightfield image based on a second mathematical combination of camera images corresponding to different polarizations.

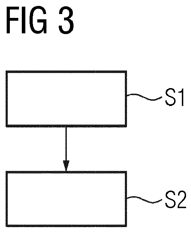

Figure 3 shows a flow diagram for a method for analyzing a biological probe. The method may be carried out with one of the devices 1a, 1b shown in figures 1 and 2 and described above. That is, the camera used in the method comprises an optical microscope 2a, 2b with a support structure 210 for supporting the biological probe. A beam splitting device 3a, 3b splits a beam path of the optical microscope 2a, 2b into a plurality of beam paths directed towards a plurality of cameras 41a-4na, 41b-44b.

For at least some of the cameras 41a-4na, 41b-44b, focal lengths of the cameras 41a-4na, 41b-44b differ from one another and/or wavelength ranges captured by the cameras 41a-4na, 41b-44b for generating the camera images of the biological probe differ from one another.

In a first method step S1, at least one of the cameras 41a-4na, 41b-44b generates a camera image of the biological probe. Preferably, some or all cameras 41a-4na, 41b-44b are synchronized and generate camera images at the same time.

In a second method step S2, a computing device 5 may carry out a TIE-based reconstruction based on camera images of cameras 41a-4na, 41b-44b with different focal lengths. Additionally or alternatively, the computing device 5 may generate a DIC image and/or a brightfield image.

It should be understood that all advantageous options, variance in modifications described herein and the foregoing with respect to embodiments of the device according to the first aspect may be equally applied to embodiments of the method according to the second aspect, and vice versa.

In the foregoing detailed description, various features are grouped together in one or more examples for the purpose of streamlining the disclosure. It is to be understood that the above description is intended to be illustrative, and not restrictive. It is intended to cover alternatives, modifications and equivalents. Many other examples will be apparent to one skilled in the art upon reviewing the above specification.

List of Reference Signs

| | |
|---|---|
| 1a, 1b | device |
| 2a, 2b | microscope |
| 3a, 3b | beam splitting device |
| 5 | computing device |
| 31 | first beam splitter |
| 32 | second beam splitter |
| 33 | third beam splitter |
| 41a-4na | cameras |
| 41b-44b | first to fourth cameras |
| 61 | first filter |
| 62 | second filter |
| 63 | third filter |
| 201-203 | LEDs |
| 204 | first dichroic mirror or beam combiner |
| 205 | second dichroic mirror or beam combiner |
| 206 | first aperture |
| 207 | polarizer |
| 208 | first Wollaston prism |
| 209 | second aperture |
| 210 | support structure |
| 211 | second Wollaston prism |
| 212 | analyzer |
| S1, S2 | method steps |

**Claims**

1. A device (1a; 1b) for observing a biological probe, comprising:

   an optical microscope (2a; 2b) comprising a support structure (210) for supporting the biological probe in a beam path of the optical microscope;
   a beam splitting device (3a; 3b) being arranged in the beam path downstream from the biological probe, wherein the beam splitting device (3a; 3b) is configured to split the beam path into a plurality of beam paths; and
   a plurality of cameras (41a-4na; 41b-44b), wherein each camera (41a-4na; 41b-44b) is arranged in one beam path of the plurality of beam paths and is configured to generate camera images of the biological probe;
   wherein, for at least some of the cameras (41a-4na; 41b-44b), focal lengths of the cameras (41a-4na; 41b-44b) differ from one another and/or wavelength ranges captured by the cameras (41a-4na; 41b-44b) for generating the camera images of the biological probe differ from one another and/or sensor types of the cameras (41a-4na; 41b-44b) differ from one another.

2. The device (1a; 1b) according to claim 1, wherein the optical microscope (2a; 2b) is a polarized light microscope.

3. The device (1a) according to claim 2, wherein the polarized light microscope (2a) is an interference-based microscope, in particular an interference reflection microscope.

4. The device (1a; 1b) according to claim 2, wherein the polarized light microscope (2a; 2b) is a differential interference contrast, DIC, microscope.

5. The device (1a; 1b) according to any of the preceding claims, wherein the plurality of cameras (41a-4na; 41b-44b) comprises at least one polarization sensitive camera configured to generate a plurality of camera images corresponding to different polarizations.

6. The device (1a; 1b) according to claim 4 and 5, further comprising a computing device (5) configured to generate a DIC image based on a mathematical combination of the camera images corresponding to the different polarizations.

7. The device (1a; 1b) according to claim 6, wherein the computing device (5) is configured to carry out a DIC-based phase reconstruction.

8. The device (1a; 1b) according to claim 6 or 7, wherein the computing device (5) is configured to generate a brightfield image based on a mathematical combination of the camera images corresponding to the different polarizations.

9. The device (1a; 1b) according to any of the preceding claims, wherein the cameras (41a-4na; 41b-44b) comprise at least one color camera.

10. The device (1a; 1b) according to any of the preceding claims, wherein for at least some cameras (41a-4na; 41b-44b) focal lengths of the cameras (41a-4na; 41b-44b) differ from one another, wherein the device (1a; 1b) further comprises a computing device (5) configured to carry out a transport-of-intensity-equation, TIE,-based phase reconstruction based on the camera images of the cameras (41a-4na; 41b-44b).

11. The device (1a; 1b) according to any of the preceding claims, wherein the cameras (41a-4na; 41b-44b) are synchronized to generate camera images of the biological probe at the same time.

12. The device (1a; 1b) according to any of the preceding claims, wherein the cameras (41a-4na; 41b-44b) are firmly attached at predefined locations.

13. A method for observing a biological probe, using a device (1a; 1b) according to any of the preceding claims, comprising:
   generating (S1) at least one camera image of the biological probe by at least one camera (41a-4na; 41b-44b) of the plurality of cameras (41a-4na; 41b-44b) of the device (1a; 1b).

14. The method according to claim 13, wherein at least two cameras (41a-4na; 41b-44b) of the plurality of cameras (41a-4na; 41b-44b) of the device (1a; 1b) simultaneously generate a respective camera image of the biological probe.

**15.** The method according to claim 13 or 14, further comprising the step of generating a DIC image based on a mathematical combination of the camera images corresponding to different polarizations.

FIG 1

# FIG 2

1b

# FIG 3

S1

S2

# EP 4 137 863 A1

Europäisches
Patentamt

European
Patent Office

Office européen
des brevets

# EUROPEAN SEARCH REPORT

**Application Number**

EP 21 19 2048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/155363 A1 (PHOTOTHERMAL SPECTROSCOPY CORP [US]) 5 August 2021 (2021-08-05) | 1-9, 11-15 | INV. G02B21/00 G02B21/36 |
| Y | * abstract * * Page 1, lines 10-33; Page 4, lines 3-32; Page 14, lines 24-27; Page 15, lines 9-18; Page 16, lines 14-20 & lines 29-32; Page 16, line 21 to Page 17, lines 32; Page 20, line 21 to Page 22, line 20; Page 31, lines 27-29; Page 31, lines 29-30; Page 32, lines 1-23; Page 31, line 33 to Page 32, line 3; Page 31, line 27 to Page 33, line 34; Page 36, lines 19-26 * * figures 1-11 * | 10 | |
| X | EP 3 575 848 A1 (SIEMENS HEALTHCARE DIAGNOSTICS INC [US]) 4 December 2019 (2019-12-04) * abstract * * Paragraphs [0001], [0012]-[0017], [0037]-[0041], [0051]-[0056], [0063]-[0070], [0079], [0104]-[0109], [0144]-[0146] * * figure 1 * | 1,13 | |
| X | WO 2015/121853 A1 (B G NEGEV TECHNOLOGIES AND APPLIC LTD AT BEN GURION UNIVERSITY [IL]) 20 August 2015 (2015-08-20) * abstract * * Page 1, lines 7-9; Page 6, line 18 to Page 8, line 8; Page 13, line 11 to Page 14, line 6; Page 14, line 23 to Page 16, line 4; Page 24, line 18 to Page 25, line 20; Page 27, lines 1-19 * * figures 1-15 * | 1,13 | |

**TECHNICAL FIELDS SEARCHED (IPC)**

G02B

-/--

The present search report has been drawn up for all claims

| Place of search | Date of completion of the search | Examiner |
|---|---|---|
| Munich | 4 February 2022 | Kienle, Philipp |

EPO FORM 1503 03.82 (P04C01)

**page 1 of 2**

13

Europäisches
Patentamt

European
Patent Office

Office européen
des brevets

# EUROPEAN SEARCH REPORT

**Application Number**

**EP 21 19 2048**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | QUAN XIANGYU ET AL: "Multimodal Microscopy: Fast Acquisition of Quantitative Phase and Fluorescence Imaging in 3D Space", IEEE JOURNAL OF SELECTED TOPICS IN QUANTUM ELECTRONICS, IEEE, USA, vol. 27, no. 4, 16 November 2020 (2020-11-16), pages 1-11, XP011825326, ISSN: 1077-260X, DOI: 10.1109/JSTQE.2020.3038403 [retrieved on 2020-12-11] * abstract * * Page 2, section "B. Fluorescence Imaging"; Page 3, section "C. Studies to Realize Multimodality"; Page 6, section "B. Multimodal Microscopy By Transport of Intensity Equation" to Page 8, section "IV. CONCLUSION" * * figures 1-10 * | 10 | |
| Y | US 2018/089817 A1 (BLUMRICH JOERG FREDERIK [DE]) 29 March 2018 (2018-03-29) * abstract * * Paragraphs [0002]-[0003], [0036]-[0038], [0098]-[0100], [0106] * * figures 1-3 * | 10 | TECHNICAL FIELDS SEARCHED (IPC) |

The present search report has been drawn up for all claims

| Place of search | Date of completion of the search | Examiner |
|---|---|---|
| Munich | 4 February 2022 | Kienle, Philipp |

EPO FORM 1503 03.82 (P04C01)

## ANNEX TO THE EUROPEAN SEARCH REPORT
## ON EUROPEAN PATENT APPLICATION NO.

EP 21 19 2048

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2022

| Patent document cited in search report | | | Publication date | Patent family member(s) | | | Publication date |
|---|---|---|---|---|---|---|---|
| WO 2021155363 | A1 | | 05-08-2021 | NONE | | | |
| EP 3575848 | A1 | | 04-12-2019 | CN | 112236705 | A | 15-01-2021 |
| | | | | EP | 3575848 | A1 | 04-12-2019 |
| | | | | EP | 3803495 | A1 | 14-04-2021 |
| | | | | JP | 2021525866 | A | 27-09-2021 |
| | | | | US | 2021217190 | A1 | 15-07-2021 |
| | | | | WO | 2019229573 | A1 | 05-12-2019 |
| WO 2015121853 | A1 | | 20-08-2015 | US | 2017059299 | A1 | 02-03-2017 |
| | | | | WO | 2015121853 | A1 | 20-08-2015 |
| US 2018089817 | A1 | | 29-03-2018 | DE | 102016218452 | A1 | 29-03-2018 |
| | | | | TW | 201830132 | A | 16-08-2018 |
| | | | | US | 2018089817 | A1 | 29-03-2018 |

EPO FORM P0459

For more details about this annex : see Official Journal of the European Patent Office, No. 12/82

## REFERENCES CITED IN THE DESCRIPTION

### Patent documents cited in the description

- US 20160139388 A1

### Non-patent literature cited in the description

- **JAFARFARD.** Dual wavelength diffraction phase microscopy for simultaneous measurement of RI and thickness. *Opt. Lett.,* 2014, vol. 39, 2908-2911
- **RAPPAZ.** Comparative study of human erythrocytes by digital holographic microscopy confocal microscopy and impedance volume analyzer. *Cytometry A,* 2008, vol. 73 (10), 895-903
- **PHILLIPS.** Quantitative optical microscopy measurement of cellular biophysical features with a standard optical microscope. *J. Vis. Exp.,* 2014, vol. 86, 50988
- **SHIBATA et al.** Video-rate quantitative phase analysis by a DIC microscope using a polarization camera. *Biomed. Opt. Express,* 2019, vol. 10, 1273-1281
- **FRANK et al.** *Non-interferometric, non-iterative phase retrieval by Green's functions,* 2010